# EUROPÄISCHE PATENTSCHRIFT

(11) **EP 1 112 802 B1**
(45) Veröffentlichungstag und Bekanntmachung des Hinweises auf die Patenterteilung: **11.06.2003**
(21) Anmeldenummer: 99125782.5
(22) Anmeldetag: 23.12.1999
(51) Int. Cl.: B23K 26/06, B23K 26/08, B29C 65/16

(54) **Verfahren und Vorrichtung zum Erwärmen von mindestens zwei Elementen mittels Laserstrahlen mit hoher Energiedichte**
Method and device for heating at least two elements by means of high energy density laser beam
Procédé et dispositif pour chauffer au moins deux éléments par rayon laser à haute densité d'énergie

(43) Veröffentlichungstag der Anmeldung: 04.07.2001
(73) Patentinhaber: Leister Process Technologies, 6060 Sarnen (CH)
(72) Erfinder: Jie-Wei Chen, CH-6055 Alpnach Dorf (CH); Christiane Leister, CH-6063 Stalden (CH)
(74) Vertreter: Klocke, Peter, Dipl.-Ing.

(56) Entgegenhaltungen:
- EP-A- 0 835 715
- EP-A- 0 836 905
- WO-A-95/16570

## Beschreibung

Die vorliegende Erfindung betrifft ein Verfahren zum Erwärmen von mindestens zwei Elementen mittels Laserstrahlen.

Die vorliegende Erfindung betrifft insbesondere ein Laserfügeverfahren zum Verbinden von verschiedenen Werkstücken aus Kunststoff oder Kunststoff mit anderen Materialien, wobei das obere, der Laserquelle zugewandte Werkstück aus einem für den Laserstrahl transparenten Material und das zweite Werkstück aus einem für den Laserstrahl absorbierenden Material besteht, so dass die aneinander angrenzenden Kontaktflächen der beiden Werkstücke aufschmelzen und bei der anschließenden Abkühlung unter Druck sich miteinander verbinden, wobei zwischen der Laserquelle und den zu verbindenden Werkstücken zur Verbindung der Werkstücke in einem bestimmten Fügebereich der Kontaktfläche eine Maske aus einem laserundurchlässigen Material angeordnet wird, deren Strukturen größer sind als die verwendete Wellenlänge des Laserstrahls, die Laserquelle derart auf die Kontaktfläche eingestellt wird, dass sich ein vorhangartiger Laserstrahl ausbildet und an der Kontaktfläche eine Linie entsteht, vorhangartiger Laserstrahl ausbildet und an der Kontaktfläche eine Linie entsteht, und der Laserstrahl und die Maske relativ zueinander bewegt werden.

Dieses Verfahren wird in der EP-A-0 997 261 beschrieben, die im Sinne vom Artikel 54(3) EPÜ Stand der Technik ist. Dieses Maskenfügeverfahren für mikrostrukturierte Bauteile benötigt sehr hohe Bewegungsgeschwindigkeiten zwischen dem Laserstrahl und den zu verbindenden Bauteilen. Um andererseits auch die notwendige Schmelztemperatur zu erreichen, erfordert dies eine hohe Energiedichte der Laserstrahlung. Die im Augenblick zur Verfügung stehenden Laserdiodenreihen von Halbleiterlasern erreichen jedoch nur eine Leistung von max. 60-80 W. Zwar gibt es auch Diodenstapel mit einer Leistung im kW-Bereich, deren Laserstrahl auch mittels einer geeigneten Optik auf eine Linie gebracht werden kann. Zweckmäßigerweise wird der Laserstrahl senkrecht zu dem Fügebereich der Kontaktfläche geführt, um eine möglichst genaue Abbildung insbesondere bei kleinen Strukturen, zu erzielen und unnötige Schatteneffekte zu vermeiden. Durch die Bauweise dieser Laser in Form von Diodenstapel trifft der Laserstrahl unter einem Winkel auf die Maske. Für das Maskenfügeverfahren ist eine derartiger Winkel wegen der daraus resultierenden Ungenauigkeiten nicht akzeptabel.

Zum Aufbringen oder Entfernen beispielsweise von SMD-Halbleiterbauelementen (Surface Mount Device) auf einem Träger wird in der EP-A- 1 093 880, die im Sinne vom Artikel 54(3) EPÜ Stand der Technik ist, ein Verfahren beschrieben, um diese mittels Laserstrahlen mit den Leiterzügen auf oder in einer Leiterplatte zu erwärmen. Die Verbindung kann dabei mittels eines Lotes oder auch nur durch entsprechende Erwärmung der Fügepartner ohne Lot erfolgen (sog. Mikrofügen). Gemäß dem Verfahren wird zwischen der Laserquelle und den Bauelementen eine Maske aus einem laserstrahlundurchlässigen Material angeordnet, bei der die zu verbindenden Bereiche ausgenommen sind. Alle Erwärmungsbereiche werden dann mittels eines oder mehrerer Laserstrahlen einzeln oder gleichzeitig bestrahlt, so dass die Erwärmungsbereiche der Bauelemente erwärmt und miteinander verbunden oder getrennt werden. Dabei kann u.a. ein linienförmiger Laserstrahl gewählt werden, der sich relativ zu den Bauelemente in der Regel langsamer als bei dem vorstehend erwähnten Laserfügeverfahren, jedoch kann auch die Bereitstellung der erforderlichen Energiedichte ein Problem darstellen.

Aus der WO-A-96/16570 ist ein Verfahren zum selektiven Erwärmen von mindestens zwei Materialien mittels Laserstrahlen beschrieben, wobei zwischen der Strahlenquelle und den Materialien eine Maske aus einem strahlundurchlässigem Material angeordnet wird, bei der Bereiche ausgenommen sind, durch die die Laserstrahlung auf selektierte Erwärmungsbereiche der unter der Maske angeordneten Materialien zugeführt wird. Mittels einer Zoom-Optik werden unterschiedliche Laserlinienlängen erzeugt, wobei alle Erwärmungsbereiche durch Bestrahlen erwärmt werden, wobei eine Relativbewegung zwischen einem Laserstrahl und den Materialien durchgeführt wird. Bei den beschriebenen Verfahren wird ein externer Excimerlaser eingesetzt, um auf dem unteren Werkstück lithographisch ein geformtes Bild herzustellen.

Die EP-A-835 715 offenbart eine Vorrichtung und Verfahren zur Laser-Behandlung eines Werkstückes mittels eines Diodenlasers, der mit seiner Laseroptik zur Ausbildung eines Fokus in Form einer Fokuslinie ausgebildet ist. Zur Erreichung einer ausreichenden Laserleistung werden mehrere Diodenlaser durch Koppelelemente zusammengefasst und mittels einer entsprechenden Laseroptik auf den Linien Fokus 13 abgebildet.

Die EP-A-836 905 offenbart ein Verfahren und Anordnung zur temperaturgeregelten Oberflächenbehandlung, insbesondere zum Härten von Werkstückoberflächen mittels Laserstrahlen, wobei eine Intensitätsverteilung der Laserstrahlen auf der Werkstückoberfläche fortlaufend an ein gewünschtes Temperaturprofil angepasst wird. Hierzu wird eine Leistungsaddition durch Überlagerung einzelner Linienfoki von Diodenstapel auf der Werkstückoberfläche vorgenommen.

Der vorliegenden Erfindung liegt daher die Aufgabe zugrunde, eine Möglichkeit zur Bereitstellung einer ausreichenden Energiedichte vorzuschlagen, um eine ausreichende Erwärmung zum Zwecke der Verbindung von mindestens zwei Elementen gleicher oder unterschiedlicher Materialien, gemäß dem eingangs angegebenen Laserfügeverfahren zu erzielen, d. h. eine hochwertige flächige Verbindung im Bereich der Fügezone von plan aufeinanderliegenden Körpern, wobei mindestens ein Körper aus Kunststoff besteht, mit einer wohl definierten Fügezone herzustellen.

Diese Aufgabe wird erfindungsgemäß durch ein Verfahren mit den Merkmalen des Anspruchs 1 gelöst. Weitere vorteilhafte Ausgestaltungen des Verfahrens sind den Unteransprüchen zu entnehmen.

Danach werden zur Erzeugung einer hohen Energiedichte in dem Fügebereich Laserstrahlen von mindestens zwei Diodenlaser zusammengeführt und anschließend mittels einer Zoom-Optik unterschiedliche Laserlinienlängen erzeugt. Diese umfasst beispielsweise eine Zylinderlinse, die in Strahlrichtung bewegbar ist, um den Abstand zur Maske variabel einstellen zu können. Die Relativbewegung zwischen dem Laserstrahl und den Bauteilen kann entweder durch Bewegung des Laserstrahls, beispielsweise mittels eines beweglichen Umlenkspiegels, oder durch die Bewegung der Bauteile auf einem x-y-Tisch erreicht werden.

Gemäß einer bevorzugten Ausführungsform wird zu einem ersten Laserstrahl, der senkrecht zu der Oberfläche der Maske verläuft, mindestens ein weiterer senkrecht zu dem ersten Laserstrahl verlaufender Sekundärlaserstrahl über jeweils einen Strahlteiler zugemischt und der daraus resultierende Laserstrahl auf die Maske gerichtet wird. Hierbei wird ein wohldefinierter Strahlteiler verwendet, der für den einen Laserstrahl hochtransparent und für den jeweiligen senkrecht zum ersten Laserstrahl auftreffenden Sekundärlaserstrahl hochreflektierend ist. Vorzugsweise werden Laserstrahlen entweder mit unterschiedlicher Wellenlänge oder mit gleicher Wellenlänge jedoch unterschiedlicher Polarisation verwendet. Dieses Verfahren und die entsprechende Vorrichtung erlauben zur Zeit eine Leistung von 200-300 W.

Gemäß einer anderen bevorzugten Ausführungsform werden mehrere Laserstrahlen parallel zueinander mittels einer Linse auf den Fügebereich fokussiert. Hierzu werden die Laserquellen dicht (Abstand ca. 1 mm) neben einander angeordnet. Die dichte Bauweise kann das Winkelproblem ebenfalls limitieren, wenn die Brennweite von der Fokuslinie lange genug ist. Hiermit ist zur Zeit eine Leistung von 200 W möglich.

Dieses Verfahren ermöglicht somit, Kunststoffplatten,-spritzteile oder -folien miteinander oder mit anderen Materialien, beispielsweise Metall, Legierungen, Kunststoff, Keramik, Halbleitermaterialen, organische oder nicht organische Substanzen, mit kurzer Taktzeit und einer hochwertigen Qualität zu verbinden oder Werkstücken, die fein strukturiert sind, ohne Verletzung der Strukturierung auf der erwünschten Zone präzise flächig zu verbinden, indem einerseits eine ausreichende Energiedichte trotz der an sich zu geringen Laserleistung der einzelnen Laser zur Verfügung gestellt wird, und andererseits auch die Linienlänge verändert werden kann. Dadurch wir eine hohe Flexibilität erreicht.

Nachfolgend wird die Erfindung anhand von Ausführungsbeispielen in Verbindung mit den begleitenden Zeichnungen näher erläutert. Es stellen dar:
- Figur 1: eine prinzipielle Darstellung einer Anordnung mit zwei senkrecht zu einander angeordneten Laserquellen;
- Figur 2: eine schematische Darstellung für die Anordnung gemäß Figur 1 mit mehreren parallelen Laserquellen senkrecht zu einer ersten Laserquelle und
- Figur 3: eine prinzipielle Darstellung mit einer anderen Bauweise der Laserquelle mit parallelen Halbleiterlasem.

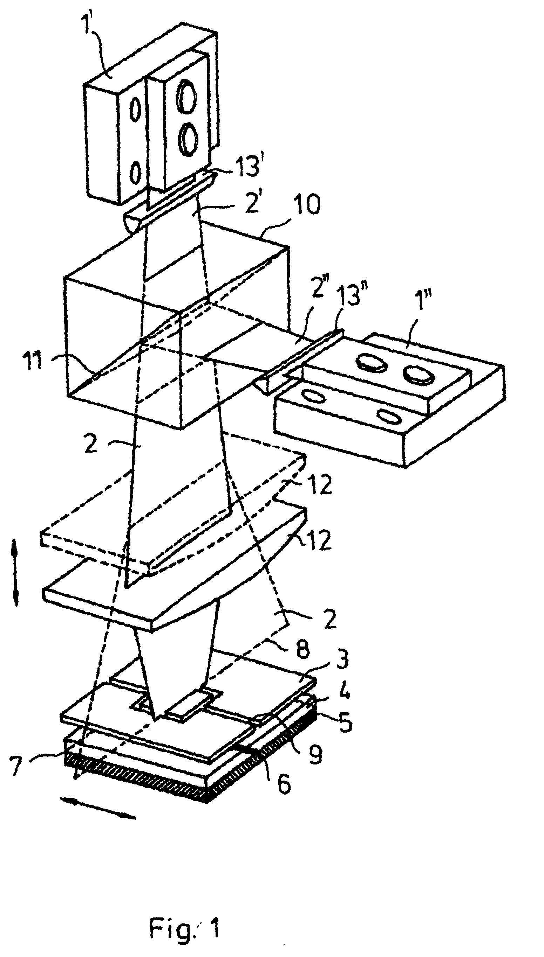

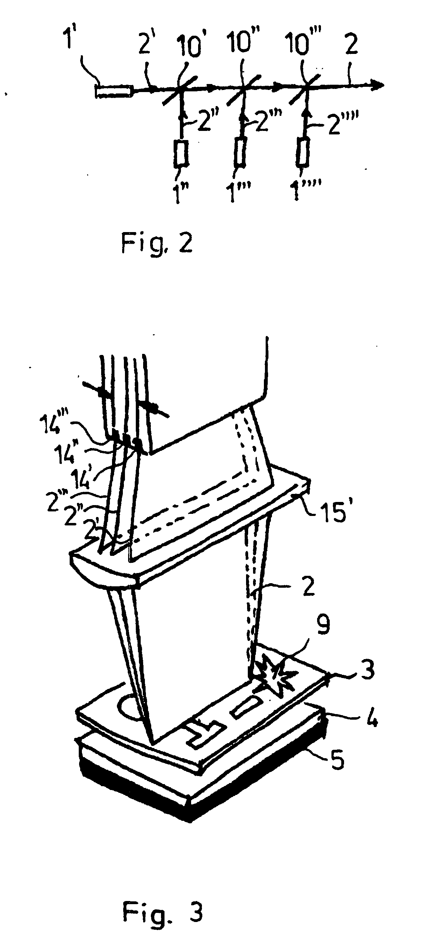

Figur 1 zeigt beispielhaft eine Anordnung zum flächigen Verschweißen von Kunststoffplatten 4, 5, die nur in einem bestimmten Fügebereich 6 mittels eines Laserstrahls 2 und einer Maske 3 verschweißt werden sollen. Entsprechend könnte die Anordnung auch zum Verbinden oder Trennen von Bauelementen (SMD auf Träger etc.) ausgestaltet sein. Die Anordnung besteht aus einer ersten Laserquelle 1', beispielsweise einem oder mehreren in Linie angeordneten Halbleiterlaser (Diodenlaser), deren emittierte Laserstrahlung direkt mit einer Kollimatorlinse 13' kollimiert wird. Die Laserquelle 1' wird so platziert, dass der Laserstrahl 2 als Strahlenvorhang senkrecht durch Öffnungen 9 der Maske 3 in den Fügebereich 6 der Kontaktzone 7 zwischen den beiden Kunststoffplatten 4, 5 gebracht wird. Zuvor gelangt der Laserstrahl 2' durch einen Strahlteiler 10, der für den Laserstrahl 2' hochtransparent ist. Von der senkrecht zu dem ersten Laserstrahl 2' angeordneten Laserquelle 1" gelangt, ebenfalls mittels einer Kollimatorlinse 13" kollimiert, ein entsprechender Laserstrahl 2" zu dem Strahlteiler 10 und trifft dort auf eine Fläche 11, die für diesen Laserstrahl 2" hochreflektierend ist und ihn dadurch mit dem anderen Laserstrahl 2' zum Laserstrahl 2 vereint. Dabei weist der Laserstrahl 2' eine andere Wellenlänge auf als der Laserstrahl 2". Eine andere Möglichkeit ist, dass die Wellenlängen der Laserstrahlen 2', 2" gleich sind, jedoch die Polarisation verschieden ist. Sofern mehrere Laserquellen parallel zu der Laserquelle 1" angeordnet werden, um die Energiedichte zu erhöhen, so sind diese wir in der Figur 2 schematisch angedeutet, in Verbindung mit den Strahlteilem 10'-10"' anzuordnen. Die Bedingungen für die Wellenlängen bzw. Polarisation gelten entsprechend.

Der Laserstrahl 2 trifft anschließend auf eine Zylinderlinse 12, die in Strahlrichtung bewegbar ist, um unterschiedliche Linienlängen zu erzeugen. Diese sind gestrichelt dargestellt.

Die energetisch wirksame Laserlinie 8 wird auf die Kontaktfläche 7 gestrahlt. Dabei ist, wie für dieses Verfahren erforderlich, die Kunststoffplatte 4 für die Laserstrahlung transmittierend und die Kunststoffplatte 5 absorbierend ausgebildet. Der Laserstrahl 2 wird relativ zu der Maske 3 bzw. den Kunststoffplatten 4, 5 kontinuierlich bewegt, so dass die Kunststoffplatten 4, 5 in dem Fügebereich 6 direkt unter der Laserlinie 8 in einen schmelzflüssigen Zustand gelangen und anschließend nach der Abkühlung verfestigen.

Figur 3 zeigt schematisch eine Ausführungsform, die mehrere parallel zueinander angeordnete Laserquellen 14'-14"' aufweist, so dass die erzeugten Laserstrahlen 2'-2"' dicht nebeneinander verlaufen, um möglichst keinen Winkelfehler zu erzeugen. Der Abstand der Laserquellen beträgt ca. 1 mm, wobei zur Vermeidung von Winkelfehler nur soviel Laserquellen verwendet werden können, dass sich eine maximale Dicke der parallelen Strahlen 2'-2"' von ca. 5 mm ergibt. Die parallelen Strahlen 2'-2" werden mittels einer Sammellinse 15' auf die Kontaktfläche 7 kollimiert.

Die vorstehend erwähnte erforderliche Relativbewegung kann entweder durch Bewegung der Kunststoffplatten 4, 5 oder des Laserstrahls 2 erfolgen. Dies kann beispielsweise durch die zusätzliche Verwendung eines beweglichen Umlenkspiegels in den Strahlengang vor der Zylinderlinse oder Sammellinse realisiert werden.

## Patentansprüche

1. Verfahren zum Verbinden von verschiedenen Werkstücken (4, 5) aus Kunststoff oder Kunststoff mit anderen Materialien, wobei das obere, der Laserquelle (1) zugewandte Werkstück (4) aus einem für den Laserstrahl (2) transparentem Material und das zweite Werkstück (5) aus einem für den Laserstrahl (2) absorbierendem Material besteht, so dass die aneinander angrenzenden Kontaktflächen (7) der beiden Werkstücke (4, 5) aufschmelzen und bei der anschließenden Abkühlung unter Druck sich miteinander verbinden, wobei zwischen der Laserquelle (1) und den zu verbindenden Werkstücken (4, 5) zur Verbindung der Werkstücke in einem bestimmten Fügebereich (6) der Kontaktfläche (7) eine Maske (3) aus einem laserundurchlässigen Material angeordnet wird, deren Strukturen (9) größer sind als die verwendete Wellenlänge des Laserstrahls (2), die Laserquelle (1) derart auf die Kontaktfläche (7) eingestellt wird, dass sich ein vorhangartiger Laserstrahl ausbildet und an der Kontaktfläche eine Linie (8) entsteht, und der Laserstrahl (2) und die Maske (3) relativ zueinander bewegt werden, und zur Erzeugung einer hohen Energiedichte in dem Fügebereich (6) Laserstrahlen von mindestens zwei Diodenlaser (1'-1"") zusammengeführt und anschließend mittels einer Zoom-Optik (12) unterschiedliche Laserlinienlängen (8) erzeugt werden.

2. Verfahren nach Anspruch 1, **dadurch gekennzeichnet, dass** zu einem ersten Laserstrahl (2'), der senkrecht zu der Oberfläche der Maske (3) verläuft, mindestens ein weiterer senkrecht zu dem ersten Laserstrahl verlaufender Sekundärlaserstrahl (2'-2"") über jeweils einen Strahlteiler (10-10"') zugemischt und der daraus resultierende Laserstrahl (2) auf den Fügebereich (6) gerichtet wird.

3. Verfahren nach Anspruch 2, **dadurch gekennzeichnet, dass** Laserstrahlen entweder mit unterschiedlicher Wellenlänge oder mit gleicher Wellenlänge jedoch unterschiedlicher Polarisation verwendet werden.

4. Verfahren nach Anspruch 1, **dadurch gekennzeichnet, dass** mehrere Laserstrahlen (2'-2"') parallel zueinander mittels einer Linse (15) auf den Fügebereich (6) fokussiert werden.

## Claims

1. Method of joining various workpieces (4, 5) formed from plastics material or plastics material including other materials, wherein an upper workpiece (4), which faces a laser source (1), is formed from a material which is transparent to the laser beam (2), and a second workpiece (5) is formed from a material which is absorbent to the laser beam (2), so that the contact faces (7), which abut against one another, of the two workpieces (4, 5) fuse and interconnect with one another during a subsequent cooling under pressure, wherein a mask (3), formed from a laser-impermeable material, is disposed between the laser source (1) and the workpieces (4, 5) to be joined for the joining of the workpieces at a specific joining area (6) of the contact face (7), structures (9) of said mask being greater than the used wavelength of the laser beam (2), the laser source (1) being adjusted to the contact face (7) in such a manner that a curtain-like laser beam is formed, and a line (8) is produced on the contact face, and the laser beam (2) and the mask (3) are moved relative to each other and, in order to generate a high energy density in the joining area (6), laser beams of at least two diode lasers (1'-1"") are combined, and subsequently different laser line lengths (8) are generated by means of zoom optics (12).

2. Method according to claim 1, **characterised in that** there is mixed with a first laser beam (2'), which extends perpendicular to the surface of the mask (3), at least one additional secondary laser beam (2'-2""), which extends perpendicular to the first laser beam, via a respective beam splitter (10-10"'), and the laser beam (2), resulting therefrom, is directed onto the joining area (6).

3. Method according to claim 2, **characterised in that** laser beams either having different wavelengths or having the same wavelengths, but having different polarisations, are used.

4. Method according to claim 1, **characterised in that** a plurality of laser beams (2'-2"') are focussed parallel to one another onto the joining area (6) by means of a lens (15).

## Revendications

1. Procédé pour le soudage de différentes pièces (4, 5) en plastique, ou en plastique avec d'autres matériaux, dans lequel la pièce supérieure (4) tournée vers la source laser (1) est constituée d'un matériau transparent au rayon laser (2) et la deuxième pièce (5) est constituée d'un matériau absorbant pour le rayon laser (2), de sorte que les surfaces de contact (7) contiguës des deux pièces (4, 5) entrent en fusion et se soudent lors du refroidissement sous pression qui suit, dans lequel on dispose entre la source laser (1) et les pièces (4, 5) à souder, pour souder les pièces dans une zone d'assemblage précise (6) de la surface de contact (7), un masque (3) en matériau imperméable au laser dont les structures (9) sont plus grandes que la longueur d'onde utilisée du rayon laser (2), la source laser (1) est réglée sur la surface de contact (7) de telle sorte qu'il se forme un rayon laser en forme de rideau et qu'il apparaît à la surface de contact une ligne (8), le rayon laser (2) et le masque (3) sont déplacés l'un par rapport à l'autre, et dans lequel, pour générer une densité d'énergie élevée dans la zone d'assemblage (6), on concentre les rayons laser d'au moins deux diodes laser (1'-1"") et on génère ensuite au moyen d'une optique de zoom (12) différentes longueurs de lignes laser (8).

2. Procédé selon la revendication 1, **caractérisé par le fait qu'**à un premier rayon laser (2'), perpendiculaire à la surface du masque (3), on ajoute, au moyen chaque fois d'un séparateur de faisceau (10-10'''), au moins un autre rayon laser secondaire (2'-2""), perpendiculaire au premier et que le rayon laser (2) résultant est dirigé sur la zone d'assemblage (6).

3. Procédé selon la revendication 2, **caractérisé par le fait qu'**on utilise des rayons laser soit de longueurs d'onde différentes, soit de même longueur d'onde mais de polarisation différente.

4. Procédé selon la revendication 1, **caractérisé par le fait qu'**on focalise sur la zone d'assemblage (6) plusieurs rayons laser (2'-2''') parallèles entre eux au moyen d'une lentille (15).
